# EUROPEAN PATENT APPLICATION

(11) **EP 1 097 793 A1**
(43) Date of publication of application: **09.05.2001**
(21) Application number: 00309895.1
(22) Date of filing: 07.11.2000
(51) Int. Cl.: B29C 49/48, B29C 49/16

(54) **Method and apparatus for blow moulding articles with internal walls**

(30) Priority: 08.11.1999 GB 9926268
(71) Applicant: Visteon UK Limited, Brentwood, Essex CM13 3BW (GB)
(72) Inventor: Daniel William Kenning, Pleshey, Chelmsford, Essex, CM3 1HH (GB)
(74) Representative: Gemmell, Peter Alan, Dr.

(57) **Abstract**

This invention relates to blow-moulding, and in particular to a method producing a hollow article with internal walls (34) by blow-moulding. The steps include: introducing a plastics material parison (10) between mould parts (12,14) while those mould parts (12,14) are separated from one another, heating and pre-blowing the parison (10) to initiate expansion thereof, introducing mould cores (16,18) between the mould parts (12,14) and into the mould cavity (40), blowing the parison (10) to its full volume, subsequently closing the mould parts (12,14) whilst fully introducing the mould cores (16,18) into the mould to form an internal wall, and retracting the cores (16,18). Because the parison (10) is fully blown before the mould is closed, the step of closing the moulds whilst introducing the mould core changes the shape, but not the area, of the parison wall. Local stretching and thinning of the molded walls is thereby avoided.

## Description

This invention relates to blow-moulding, and in particular to a method of and apparatus for blow-moulding to produce a product with one or more internal walls.

Blow-moulding is a well-known technique for producing hollow plastics articles. In blow-moulding a plastics parison which may be tubular is located within a mould cavity; its ends are nipped to form a seal and the parison is then heated and inflated so that it comes into contact with the mould walls and takes up the shape of the mould walls. Upon cooling the product retains the shape of the mould walls.

One problem with blow-moulding is that the wall thickness of the resulting product can be unsatisfactorily reduced if the mould walls include areas where the parison walls have to change direction sharply, as is the case when forming complex internal walls in the product. It is known from, for example, patent document JP 94022854 B2 to construct a mould which has an inwardly facing projection opposite to a moveable slide. Whilst this apparatus will enable the production of a blow-moulded product with an internal wall, it does not avoid problems of local thinning of the wall material.

According to the present invention there is provided a method of blow-moulding to form a hollow article with at least one internal wall, characterised in that the method comprises the steps of introducing a plastics material parison between mould parts while those mould parts are separated from one another, heating and pre-blowing the parison to initiate expansion thereof, introducing at least one mould core between the mould parts and into the mould cavity, blowing the parison to its full volume, subsequently closing the mould parts whilst fully introducing the mould core into the mould to form said internal wall(s) on said mould core(s), and retracting the core after the mould parts have closed.

Because the parison is fully blown before the mould is closed, the step of closing the moulds whilst introducing the mould core will change the shape, but not the area, of the parison wall. The method is therefore controlled such that the area of the parison wall carried into the mould by the mould core is substantially equal to the area of the blown parison unsupported by mould walls whilst the parison is being fully blown.

The internal wall of the hollow article may extend completely across the article to divide the internal space of the article into two or more separate chambers. Alternatively the wall may extend only part way into the article.

There may be more than one mould core. If there are two or more cores, then some or all of them may meet with other cores in a central part of the moulded product. Each internal wall will preferably be formed by two mould cores to reduce the chance of stretching the walls of the parison when it is being moulded.

Preferably, the two mould cores will approach one another to the extent that the portion of parison wall around the leading edge of one core will come into contact with the portion of parison wall around the leading edge of the other core. Since at this stage the plastics material forming the parison wall will heated, the two portions of parison wall will stick, forming an air tight seal when the parison has cooled.

The mould cores may be retracted from the mould before the mould parts are opened to release the moulded article and the parison walls may be forced outwardly to occupy the space previously occupied by the mould cores, in order to reduce the total, overall thickness of the interior wall.

However, the mould cores will preferably be retracted once the plastics material has set such that the so formed interior walls are hollow.

If the two mould cores do not come into direct contact, a web of plastics material extending between the two surfaces of the interior wall can remain along the line where the two mould cores meet. This web can be useful in providing structural linkage between different portions of the moulded article separated by the internal wall. However, the leading edges of the mould cores will preferably be brought together into contact along at least part of their length in order to remove the those parts of the web that are not needed.

The mould cores may be generally flat. Alternatively, to produce articles a curved internal wall, the mould cores may have curved plate portions, the radius of curvature being perpendicular to the direction of movement of the mould cores so that the cores can be retracted.

To reduce the likelihood of stretching the parison walls, the mould cores will preferably be retractable and introduceable through movement in a direction perpendicular to the long axis of the parison.

Furthermore, the mould cores will preferably be retractable and introduceable through movement in a direction perpendicular to the closing direction of the mould parts, in order to facilitate the synchronisation of the relative movement between the mould parts and mould halves.

To reduce the likelihood of piercing the parison when the mould cores are introduced, at least part of the leading edges of the mould cores will be rounded.

According to a second aspect of the invention, there is provided a blow moulding apparatus for moulding a hollow article with at least one internal wall, characterised in that the apparatus comprises separable mould parts defining between them a mould cavity, at least one retractable mould core that can be moved into the mould cavity between the mould parts for forming the internal wall, a guiding mechanism for guiding the relative movement of the mould parts and the core(s), and a controller for: controllably moving the retractable mould core(s) into the mould cavity and moving the mould parts together when blowing has taken place; and for retracting the core(s) after the mould parts are closed.

The invention will now be further described, by way of example, with reference to the accompanying drawings in which:
- Figures 1 to 5: show a sequence of steps in the blow-moulding of a hollow article in accordance with the invention;
- Figure 6: is a perspective cut away view showing part of the apparatus in Figures 1 to 5, at different steps in the blow moulding process labelled I, III and V, correspond to Figures 1, 3 and 5 respectively;
- Figure 7: shows a partly cut away perspective view of a blow moulded heater housing with internal walls;
- Figure 8: is a view from above of the heater housing shown in Figure 7; and,
- Figure 9: is a side view of the heater housing looking along the direction of the arrow marked A in Figure 7.

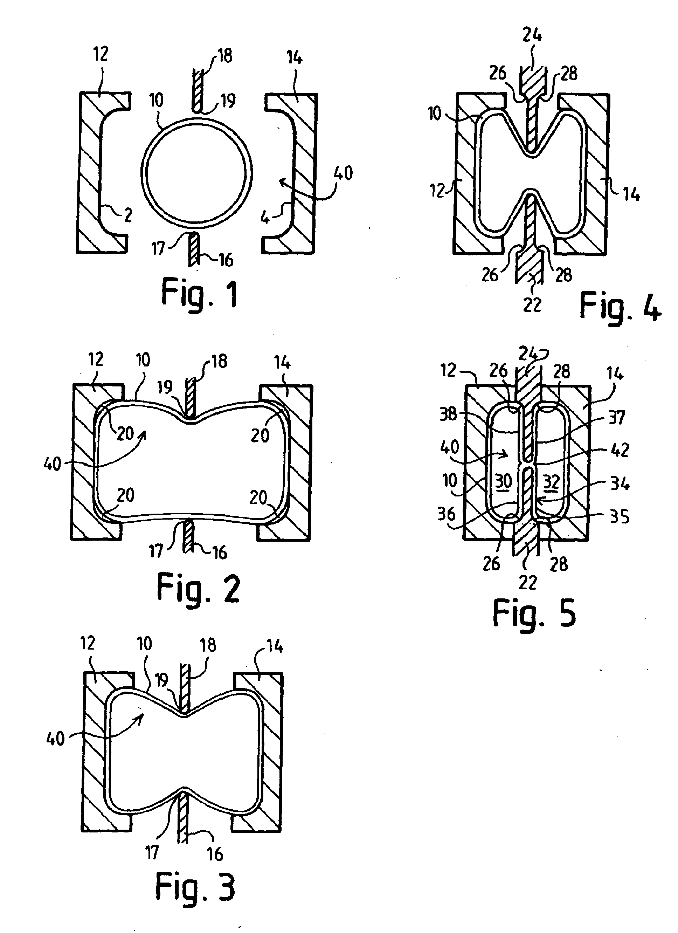

Figure 1 shows a parison 10 which has been pre-blown to a generally cylindrical form and which is arranged between two mould halves 12 and 14 which are in an open, spaced apart, position. At either side of the mould there are mould cores 16 and 18 in the form of flat plates with rounded leading edges 17,19. The mould halves 12,14 define a mould cavity 40 as these are brought together.

In the second step shown in Figure 2, the parison 10 is fully blown into contact with the internal surfaces 2,4 of the mould halves 12 and 14. The spacing between the mould halves at this time and the thickness of the parison walls will be chosen so that this position can be reached without the unsupported parts of the parison walls over inflating. It will be seen that in this position the parison walls make light, but not complete, contact with the mould halves 12,14 and that there are void areas 20 where the parison 10 has not yet fully taken up the form of the mould halves 12,14.

Between the mould halves 12,14 the parison walls are also supported by contact against the leading edges 17,19 of the mould cores 16, 18.

In the next stage shown in Figure 3 the mould halves 12,14 have begun to close and the mould cores 16, 18 have begun to approach one another. These movements are synchronised with one another, and as this movement takes place internal pressure within the parison 10 is maintained. As the internal volume within the parison is decreasing, the pressure exerted on the parison walls will increase and the parison walls will now take up the form of the internal surfaces of the mould halves 12, 14. In the figures the internal form of the mould halves is a very simple shape, but in practice a wide variety of different forms, decorative or functional, could be applied to these surfaces 2,4, so that these forms will be taken up by the parison 40.

Figure 4 shows the stage in which the moulding is nearly completed. The mould halves 12, 14 have approached one another still further and the mould cores 16, 18 have also approached one another still further. It will be seen that the cores 16, 18 are in the form of plates that flare out into concave radiused shoulders 26,28 towards a base 22, 24. When the mould is fully shut, as can be seen in Figure 5, the mould halves 12, 14 seat against the bases 22, 24 with the radiused shoulders 26,28 projecting inwards from the internal mould surfaces. The concave shape of the shoulders allows the shoulders 26,28 to align tangentially with the mould surfaces 2,4.

Figure 5 shows the last stage in moulding where the product has two chambers 30, 32 which are separated by what has become a single internal moulded wall 34 in the form of an elongate "X" with two essentially parallel upper planar arms 37,38 being connected to two similar lower planar arms 35,36 at a web 42 at the mid-point of the wall 34. Each arm 35-38 then curves outwards at the shoulders 26,28. The leading edges 17,19 of the cores 16,18 have each traversed about half of the mould cavity 40 and have become sufficiently close to each other for the plastics material around each edge 17,19 to come into contact.

In a subsequent step the mould cores 16, 18 will be withdrawn and if further pressure and heat is applied within the mould cavity 40, each pair of arms 35,36; 37,38 may be forced against one another to occupy the space previously occupied by the cores 16, 18. Alternatively, the cores 16,18 will be retracted once the plastics arms 35-38 have sufficiently set for a hollow gap to remain between them.

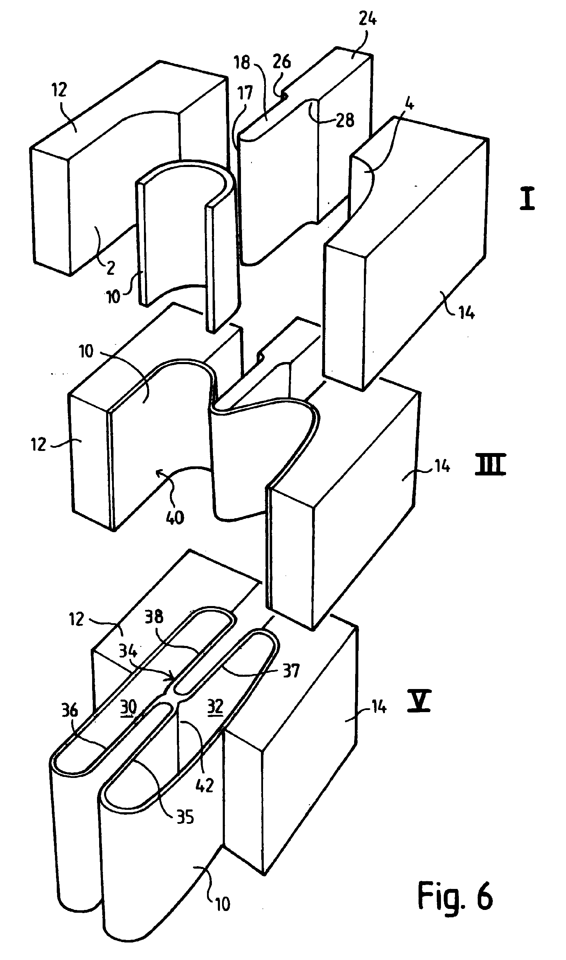

Figure 6 shows a perspective cut away view of the steps shown in Figures 1, 3, and 5, these steps being labelled I, III and V respectively. In the step labelled V when the cores 16, 18 are fully introduced into the mould cavity 40, the leading edges 17,19 are brought together (only leading edge 17 is shown here). The web 42 extending between the pairs of arms 35,36;37,38 of the interior wall 34 is formed at the line where the plastic material surrounding one of the leading edges 17 comes into contact with the plastics material surrounding the other leading edge 19.

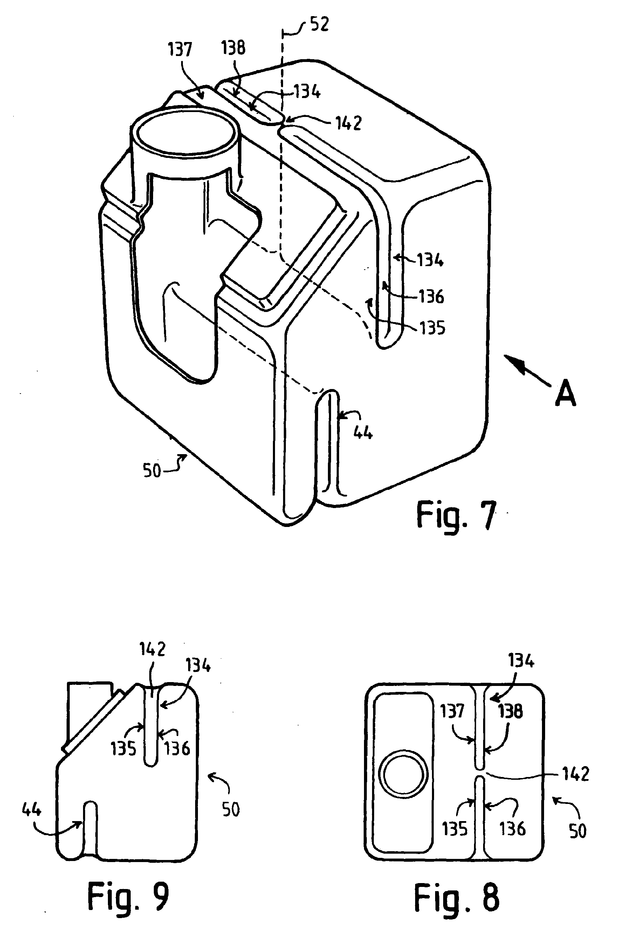

As an example of a blow moulded article formed by the blow moulding process described above, a heater and/or evaporator housing 50 for a motor vehicle passenger compartment is shown in Figures 7 to 9. Parts corresponding to those in previous figures have been given the same numerals incremented by 100. The housing 50 has a two internal walls 134 and 44. One of the internal walls 134 is shown having a web 142 extending between elongate X-shaped arms 135-138 of the internal wall 134. To form the internal wall 134, a pair of cores will come together along a direction parallel to the arrow marked A in Figure 7. A second pair of cores will be used in a similar manner to form the second internal wall 44. As can be seen in Figure 8, the web 142 is formed close to a centre line 52 of the internal wall 134 where the cores come together. The web 42 could be displaced from the centre line 52 by using cores whose leading edges traverse an unequal length of the mould cavity.

The above description illustrates how it possible to construct a blow-moulded article with an internal wall whilst avoiding significant stretching of the parison wall. Such stretching can lead to reductions in the thickness of the plastics where the wall is positioned, and thus weakening of the moulded product.

## Claims

1. A method of blow-moulding to form a hollow article with at least one internal wall (34), characterised in that the method comprises the steps of introducing a plastics material parison (10) between mould parts (12,14) of a mould while those mould parts (12,14) are separated from one another, heating and pre-blowing the parison (10) to initiate expansion thereof, introducing at least one mould core (16,18) between the mould parts (12,14) and into the mould cavity (40), blowing the parison (10) to its full volume, subsequently closing the mould parts (12,14) whilst fully introducing the mould core(s) (16,18) into the mould to form said internal wall(s) (34) on said mould core(s) (16,18), and retracting the core(s) (16,18) after the mould parts (12,14) have closed.

2. A method of blow-moulding as claimed in Claim 1, wherein the internal wall (34) is formed by two mould cores (16,18).

3. A method of blow-moulding as claimed in Claim 2, wherein the two mould cores (16,18) approach one another to the extent that the portion of parison (10) wall around the leading edge (17) of one core (16) comes into contact with the portion of parison (10) wall around the leading edge (19) of the other core (18) when the cores (16,18) are fully introduced into the mould.

4. A method of blow-moulding as claimed in any previous claim, wherein the mould cores (16,18) are retracted once the plastics material has set.

5. A method of blow-moulding as claimed in any previous claim, wherein the leading edges (17,19) of the mould cores (16,18) are brought together into contact along at least part of their length when the mould cores (16,18) are fully introduced into the mould.

6. A method of blow-moulding as claimed in any previous claim, wherein the mould cores (16,18) have curved plate portions, the radius of curvature being perpendicular to the direction of movement of the mould cores (16,18).

7. A method of blow-moulding as claimed in any previous claim, wherein the parison is tubular and the mould cores (16,18) are retractable and introduceable through movement in a direction perpendicular to the tubular axis of the parison (10).

8. A method of blow-moulding as claimed in any previous claim, wherein the mould cores (16,18) are retractable and introduceable through movement in a direction perpendicular to the closing direction of the mould parts (12,14).

9. A method of blow-moulding as claimed in any previous claim, wherein the mould core is a plate and the leading edge of the mould core or cores (16,18) is rounded along at least part of its length.

10. A method of blow-moulding as claimed in any previous claim, wherein the mould cores (16,18) have one or more shoulders that curve tangentially into the mould parts (12,14) when the mould parts (12,14) are closed.

11. A blow moulding apparatus for moulding a hollow article with at least one internal wall (34), characterised in that the apparatus comprises separable mould parts (12,14) defining between them a mould cavity, at least one retractable mould core that can be moved into the mould cavity between the mould parts (12,14) for forming the internal wall (34), a guiding mechanism for guiding the relative movement of the mould parts (12,14) and the core(s), and a controller for: controllably moving the retractable mould core(s) into the mould cavity and moving the mould parts (12,14) together when blowing has taken place; and for retracting the core(s) after the mould parts (12,14) are closed.
